# EUROPÄISCHE PATENTANMELDUNG

(11) **EP 4 191 838 A1**
(43) Veröffentlichungstag der Anmeldung: **07.06.2023**
(21) Anmeldenummer: 22207137.5
(22) Anmeldetag: 14.11.2022
(51) Int. Cl.: H02K 1/32, H02K 3/51, H02K 9/19

(54) **ROTOR FÜR EINE ELEKTRISCHE MASCHINE MIT EINEM RADIALEN KÜHLKANAL IM BLECHPAKET**

(30) Priorität: 06.12.2021 DE 102021213812
(71) Anmelder: Valeo eAutomotive Germany GmbH, 91056 Erlangen (DE)
(72) Erfinder: Siepker, Carsten, 97616 Bad Neustadt a.d.Saale (DE); Wieczorek, Christoph, 97616 Bad Neustadt a.d.Saale (DE); Bach, Regina, 97616 Bad Neustadt a.d.Saale (DE); Wolf, Nico, 97616 Bad Neustadt a.d.Saale (DE); Schlereth, Alexander, 97616 Bad Neustadt a.d.Saale (DE)
(74) Vertreter: Valeo Powertrain Systems

(57) **Zusammenfassung**

Rotor (1, 16, 23) für eine elektrische Maschine (27), umfassend eine Rotorwelle (3), ein auf der Rotorwelle (3) angeordnetes Blechpaket (2) mit einer Mehrzahl gestapelter Elektrobleche, eine an einer Axialseite des Blechpakets (2) angeordnete erste Endplatte (4) mit entlang ihres Umfanges angeordneten radialen Vorsprüngen, eine an der gegenüberliegenden Axialseite des Blechpakets (2) angeordnete zweite Endplatte (5) mit entlang ihres Umfanges angeordneten radialen Vorsprüngen (7), mehrere Rotorwicklungen (8), die jeweils um einen Vorsprung der ersten Endplatte (4) und einen axial gegenüberliegenden Vorsprung der zweiten Endplatte (5) gewunden sind, einen in der Rotorwelle (3) verlaufenden zentralen Kühlkanal (10) zum Zuführen eines Kühlmittels und einen radialen Kühlkanal (11), der in dem Blechpaket (2) von dem zentralen Kühlkanal (10) nach außen verläuft. Daneben werden eine elektrische Maschine (27) und ein Fahrzeug (26) mit einer derartigen elektrischen Maschine (27) beschrieben.

## Beschreibung

Die Erfindung betrifft einen Rotor für eine elektrische Maschine, eine elektrische Maschine mit einem Rotor und ein Fahrzeug mit einer elektrischen Maschine.

Der Rotor weist eine Rotorwelle und ein auf der Rotorwelle angeordnetes, aus gestapelten Elektroblechen gebildetes Blechpaket auf. Der Rotor gehört gemeinsam mit einem Stator und einem Gehäuse zu einer elektrischen Maschine.

Elektrische Maschinen dieser Art werden in zunehmendem Maße in elektrisch angetriebenen Fahrzeugen und Hybridfahrzeugen verwendet, überwiegend als Elektromotor für den Antrieb eines Rads oder einer Achse eines derartigen Fahrzeugs.

Ein solcher Elektromotor ist zumeist mechanisch mit einem Getriebe zur Drehzahlanpassung gekoppelt. Daneben ist der Elektromotor in der Regel elektrisch mit einem Wechselrichter gekoppelt, der aus einer von einer Batterie gelieferten Gleichspannung eine Wechselspannung für den Betrieb des Elektromotors erzeugt, beispielsweise eine mehrphasige Wechselspannung.

Es ist auch möglich, eine elektrische Maschine mit einem derartigen Rotor als Generator zur Rekuperation von Bewegungsenergie eines Fahrzeugs zu betreiben. Hierzu wird die Bewegungsenergie zunächst in elektrische Energie und dann in chemische Energie einer Fahrzeugbatterie umgewandelt.

Bei einer bestimmten Bauart von elektrisch erregten Synchronmotoren (EESM) besitzt der Rotor Rotorwicklungen, die mit Gleichstrom gespeist werden, um ein magnetisches Erregerfeld zu erzeugen. Wenn mit den Statorwicklungen eines zugehörigen Stators ein Drehfeld erzeugt wird, bewirkt das eine Kraftwirkung auf den Rotor, sodass dieser synchron zum Statordrehfeld rotiert.

Die Rotorwicklungen werden dabei allerdings stark erwärmt, sodass eine Kühlung erforderlich ist. Die Kühlung kann beispielsweise durch Aufsprühen von Öl auf die Axialseiten des Rotors erfolgen. Allerdings ist diese Art der Kühlung nur oberflächlich und deshalb wenig effektiv.

Der Erfindung liegt daher die Aufgabe zugrunde, einen Rotor für eine elektrische Maschine anzugeben, der während des Betriebs besser gekühlt werden kann.

Zur Lösung dieser Aufgabe ist ein Rotor mit den Merkmalen des Anspruchs 1 vorgesehen.

Der erfindungsgemäße Rotor umfasst eine an einer Axialseite des Blechpakets angeordnete erste Endplatte mit entlang ihres Umfanges angeordneten radialen Vorsprüngen, eine an der gegenüberliegenden Axialseite des Blechpakets angeordnete zweite Endplatte mit entlang ihres Umfanges angeordneten radialen Vorsprüngen, mehrere Rotorwicklungen, die jeweils um einen Vorsprung der ersten Endplatte und einen axial gegenüberliegenden Vorsprung der zweiten Endplatte gewunden sind, einen in der Rotorwelle verlaufenden zentralen Kühlkanal zum Zuführen eines Kühlmittels und einen radialen Kühlkanal, der in dem Blechpaket von dem zentralen Kühlkanal nach außen verläuft.

Die Erfindung beruht auf der Erkenntnis, dass eine verbesserte Kühlung erzielt werden kann, indem das Kühlmittel durch einen in der Rotorwelle ausgebildeten zentralen Kühlkanal zugeführt wird. Von dort strömt das Kühlmittel durch einen radialen Kühlkanal, der in dem Blechpaket von dem zentralen Kühlkanal nach außen verläuft. Auf diese Weise wird einerseits das Blechpaket durch den direkten Kontakt mit der Rotorwelle gekühlt. Daneben werden auch die weiter außen liegenden Rotorwicklungen gekühlt. Insgesamt kann auf diese Weise eine wesentlich bessere Kühlung im Vergleich zu dem oben erwähnten Besprühen der Axialseiten eines Rotors erzielt werden.

Anstelle nur eines radialen (beziehungsweise radial verlaufenden) Kühlkanals kann der Rotor auch mehrere radiale Kühlkanäle aufweisen, die jeweils in dem Blechpaket von dem zentralen Kühlkanal nach außen verlaufen.

Die entlang ihres Umfanges angeordneten radialen Vorsprünge einer Endplatte können auch als "Zähne" oder "Plattenfortsätze" bezeichnet werden und dienen unter anderem zum Halten der Rotorwicklungen in einer bestimmten Position.

Bei dem erfindungsgemäßen Rotor wird es bevorzugt, dass der radiale Kühlkanal in einen axialen Kühlkanal mündet, der zwischen zwei benachbarten Rotorwicklungen verläuft. Damit lassen sich die Rotorwicklungen besonders gut kühlen. Nach dem Passieren des axialen Kühlkanals kann das Kühlmittel aus dem Rotor hinausströmen.

Anstelle nur eines axialen (beziehungsweise axial verlaufenden) Kühlkanals kann der Rotor auch mehrere axiale Kühlkanäle aufweisen, in die jeweils ein anderer der radialen Kühlkanäle mündet.

Vorzugsweise ist der axiale Kühlkanal von einem Poltrenner abgedeckt, der sich axial zwischen den beiden Rotorwicklungen erstreckt. Der Poltrenner kann folglich die radiale Außenseite des axialen Kühlkanals bilden, wobei die radiale Innenseite des axialen Kühlkanals vom Blechpaket gebildet werden kann. Ferner werden zwei jeweils Innenseite und Außenseite verbindende Seiten des axialen Kühlkanals von den beiden Rotorwicklungen gebildet. Es ist möglich, dass jeder axiale Kühlkanal des Rotors, in den ein radialer Kühlkanal mündet, derart abgedeckt ist.

In weiterer Ausgestaltung der Erfindung kann es vorgesehen sein, dass der radiale Kühlkanal an seinem äußeren Ende mit einem Isolationseinsatz ausgekleidet ist, der die beiden Rotorwicklungen von dem Blechpaket trennt. Auf diese Weise werden die Rotorwicklungen elektrisch gegenüber dem Blechpaket isoliert.

Gemäß einem bevorzugten Ausführungsbeispiel der Erfindung kann der radiale Kühlkanal zumindest näherungsweise in der Mitte zwischen den Axialseiten des Blechpakets angeordnet sein. Auf diese Weise wird das Blechpaket in zwei zumindest annähernd gleich große Hälften geteilt, die von der Mitte des Blechpakets her gekühlt werden.

Es liegt auch im Rahmen der Erfindung, dass das Blechpaket eine zwischen den Elektroblechen angeordnete Kanalplatte aufweist, in welcher der radiale Kühlkanal verläuft. Eine erste Variante sieht vor, dass der radiale Kühlkanal von der Kanalplatte allein gebildet ist. Der radiale Kühlkanal ist dabei von der Kanalplatte umgeben beziehungsweise umschlossen, die zum Beispiel als Hohlprofil ausgebildet sein kann. Eine zweite, alternative Variante sieht vor, dass der radiale Kühlkanal von der Kanalplatte und einem Elektroblech gemeinsam gebildet ist. Dazu kann die Kanalplatte eine Nut aufweisen, in welcher der radiale Kühlkanal verläuft, wobei die Nut von einem Elektroblech bedeckt ist, das den radialen Kühlkanal axial begrenzt.

Bei dem erfindungsgemäßen Rotor kann die Kanalplatte eine Metalllegierung aufweisen oder aus einer Metalllegierung hergestellt sein. Vorzugsweise handelt es sich bei der Metalllegierung um eine Aluminiumlegierung. Optional kann die Kanalplatte mit einem elektrisch nichtleitenden Werkstoff, beispielsweise Kunststoff beschichtet sein.

Vorzugsweise sind die erste Endplatte und/oder die zweite Endplatte jeweils axial mit einer Endkappe abgedeckt, in die der axiale Kühlkanal mündet. Dazu kann zwischen Endkappe und Endplatte ein Hohlraum gebildet sein, der aus dem axialen Kühlkanal ausgetretenes Kühlmittel aufnimmt.

Eine Weiterbildung der Erfindung sieht vor, dass die Endkappe einen axialen Auslass aufweist, der bezogen auf den axialen Kühlkanal radial nach innen versetzt angeordnet ist. Durch den Auslass kann Kühlmittel aus der Endkappe austreten. Beim Betrieb des erfindungsgemäßen Rotors sammelt sich Kühlmittel durch die Zentrifugalkraft zunächst im radial äußeren Bereich des Hohlraums. Wegen des Versatzes tritt das Kühlmittel erst dann aus dem Auslass aus, wenn das angesammelte Kühlmittel ein bestimmtes Volumen überschreitet. Auf diese Weise wird sichergestellt, dass sich trotz des Auslasses permanent Kühlmittel in dem axialen Kühlkanal befindet. Dadurch ist stets eine ausreichende Kühlung des erfindungsgemäßen Rotors gewährleistet.

Daneben betrifft die Erfindung eine elektrische Maschine mit einem Rotor der beschriebenen Art und einem Stator, der den Rotor umgibt und gegenüber dem der Rotor drehbar ist. Der Stator kann ein weiteres Blechpaket (Statorpaket) aufweisen, das aus gestapelten Elektroblechen gebildet ist. Daneben kann der Stator Wicklungen elektrischer Leiter besitzen, zum Beispiel in Form von Spulenwicklungen oder Flachdrahtwicklungen.

Ferner betrifft die Erfindung ein Fahrzeug mit einer derartigen elektrischen Maschine, die zum Antreiben des Fahrzeugs vorgesehen ist. Die Maschine kann insbesondere ein Rad oder eine Achse des Fahrzeugs antreiben.

Die Erfindung wird nachfolgend anhand von Ausführungsbeispielen unter Bezugnahme auf die Figuren erläutert. Die Figuren sind schematische Darstellungen und zeigen:
- Fig. 1: eine geschnittene Seitenansicht eines erfindungsgemäßen Rotors gemäß einem ersten Ausführungsbeispiel,
- Fig. 2: einen Schnitt entlang der Linie II-II von Figur 1,
- Fig. 3: eine geschnittene Seitenansicht eines erfindungsgemäßen Rotors gemäß einem zweiten Ausführungsbeispiel,
- Fig. 4: eine geschnittene Seitenansicht eines erfindungsgemäßen Rotors gemäß einem dritten Ausführungsbeispiel,
- Fig. 5: eine schematische Ansicht des in Figur 4 gezeigten Rotors in Axialrichtung gesehen, und
- Fig. 6: ein erfindungsgemäßes Fahrzeug mit einer elektrischen Maschine, die einen erfindungsgemäßen Rotor aufweist.

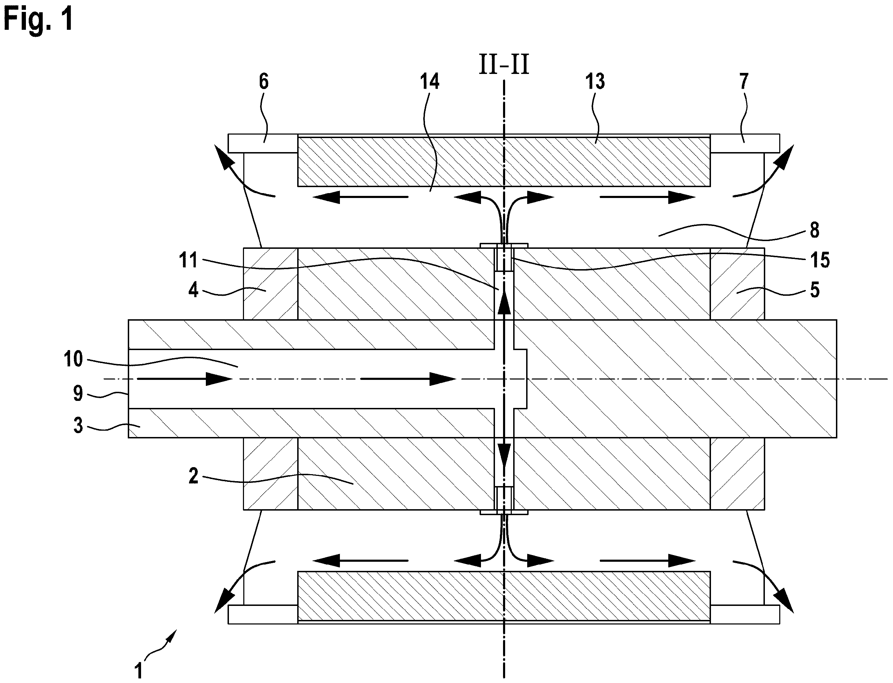

Der in Figur 1 in einer geschnittenen Seitenansicht gezeigte Rotor 1 ist für eine elektrische Maschine vorgesehen, die zum Antreiben eines Fahrzeugs eingesetzt wird. Der Rotor 1 umfasst ein aus gestapelten Elektroblechen gebildetes zylinderförmiges Blechpaket 2, das eine Rotorwelle 3 form- und/oder kraftschlüssig umschließt. Bei den Elektroblechen kann es sich um identisch ausgebildete Stanzteile handeln.

An einer ersten Axialseite des Blechpakets 2 befindet sich eine erste Endplatte 4. An der entgegengesetzten zweiten Axialseite des Blechpakets 2 befindet sich eine zweite Endplatte 5. Die Endplatten 4, 5 besitzen radiale Vorsprünge 6, 7 (auch "Plattenfortsätze"), um die Rotorwicklungen 8 gewunden sind. Beide Endplatten 4, 5 weisen jeweils einen Aluminiumkern auf, der mit Kunststoff umspritzt ist.
Die Rotorwelle 3 ist hohl ausgebildet und weist an ihrer in Figur 1 linken Axialseite einen Einlass 9 für Kühlmittel auf, das unter anderem Öl enthalten kann. Ein zentraler Kühlkanal 10 erstreckt sich von dem Einlass 9 axial etwa über die halbe Länge der Rotorwelle 3. Der Einlass 9 und der zentrale Kühlkanal 10 sind Bestandteile eines Kühlmittelkreislaufs, in dem das Kühlmittel zirkuliert. Von dem Ende des zentralen Kühlkanals 10, das sich etwa in der Mitte der Rotorwelle 3 befindet, erstreckt sich ein radialer Kühlkanal 11 in dem Blechpaket 2 nach außen.

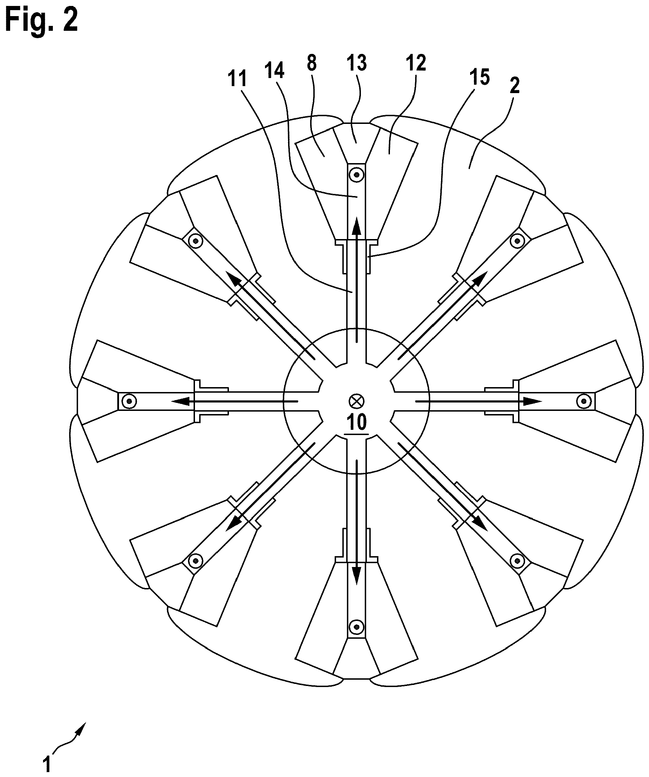

Figur 2 zeigt einen Schnitt entlang der Linie II-II von Figur 1. Man erkennt dort, dass insgesamt acht identisch gestaltete radiale Kühlkanäle 11 vorhanden sind, die ausgehend von dem zentralen Kühlkanal 10 sternförmig nach außen verlaufen.

In den Figuren wird die Strömungsrichtung des Kühlmittels symbolisch durch Pfeile dargestellt. Zusätzlich bezeichnet ein kleiner Kreis mit Kreuz in die Zeichnungsebene strömendes Kühlmittel, ein kleiner Kreis mit Punkt bezeichnet aus der Zeichnungsebene strömendes Kühlmittel.

Die radialen Kühlkanäle 11 erstrecken sich durch das Blechpaket 2 und münden jeweils zwischen zwei benachbarte Rotorwicklungen 8, 12. Die axialen Kühlkanäle 14 sind an ihrem radial äußeren Ende jeweils mit einem Poltrenner 13 abgedeckt.

Wieder auf Figur 1 Bezug nehmend, erkennt man dort, dass sich an die radialen Kühlkanäle 11 jeweils ein axialer Kühlkanal 14 anschließt. Ein Isolationseinsatz 15 in Form eines Rohres mit einem Kragen kleidet das äußere Ende des radialen Kühlkanals 11 aus und trennt die beiden Rotorwicklungen 8, 12 von dem Blechpaket 2. Der axiale Kühlkanal 14 erstreckt sich zwischen beiden Axialseiten des Rotors 1 und endet beidseitig im Bereich der Wicklungsköpfe der Rotorwicklungen 8. An jedem Ende des axialen Kühlkanals 14 befindet sich ein in Figur 1 nicht näher dargestellter axialer Auslass für das Kühlmittel, durch welchen das Kühlmittel den Rotor 1 verlassen kann. Das Kühlmittel kann in einem Pumpensumpf gesammelt und erneut durch den Kühlkreislauf des Rotors 1 gepumpt werden.

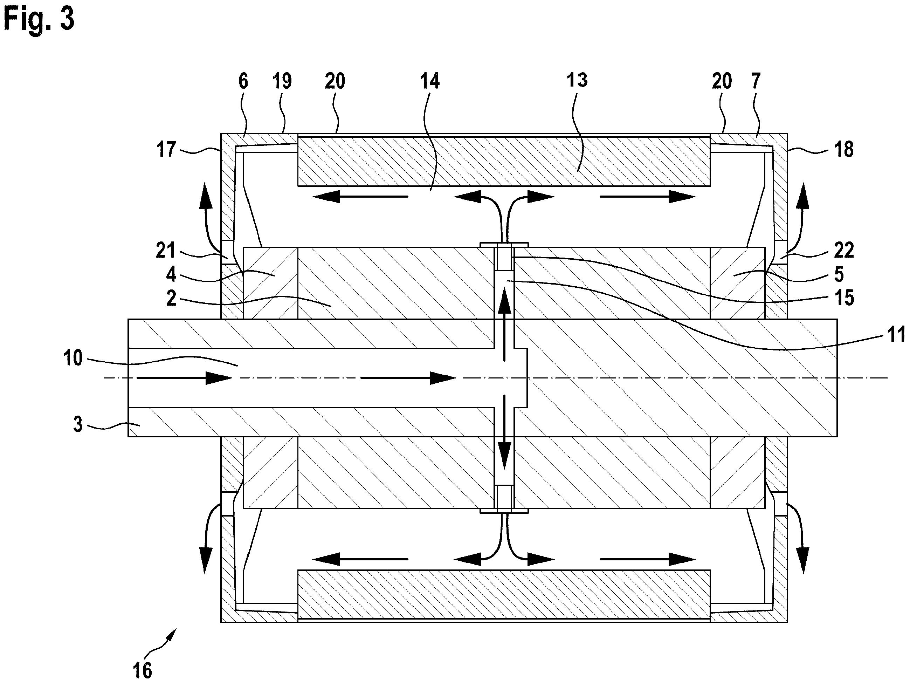

Figur 3 ist eine ähnliche Ansicht wie Figur 1 und zeigt ein zweites Ausführungsbeispiel eines erfindungsgemäßen Rotors 16. Diejenigen Komponenten, die Komponenten des ersten Ausführungsbeispiels entsprechen, werden nicht nochmals im Detail erläutert.

In Übereinstimmung mit dem ersten Ausführungsbeispiel weist der Rotor 16 eine Rotorwelle 3, ein Blechpaket 2 und Rotorwicklungen auf. Die Axialseiten des Rotors 16 sind mit Endkappen 17, 18 abgedeckt. Jede Endkappe 17, 18 weist einen axialen Abschnitt 19, 20 auf, der bündig mit einem zylinderförmigen Mantel verbunden ist, wodurch ein Gehäuse des Rotors 16 gebildet wird.

Die Endkappen 17, 18 weisen jeweils eine Mehrzahl von entlang ihres Umfangs verteilt angeordneten axialen Auslässen 21, 22 auf, durch die Kühlmittel nach dem Durchströmen eines axialen Kühlkanals 14 den Rotor 16 verlassen kann. Die Auslässe 21, 22 sind gegenüber dem axialen Kühlkanal 14 radial nach innen versetzt angeordnet . Dadurch ist sichergestellt, dass beim Betrieb der elektrischen Maschine die Wicklungsköpfe der Rotorwicklungen 8 stets gekühlt werden. Denn beim Drehen des Rotors 16 wird das Kühlmittel unter dem Einfluss der Zentrifugalkraft radial nach außen im Bereich der Wicklungsköpfe gesammelt, wodurch diese permanent mit Kühlmittel benetzt sind. Erst wenn sich dort so viel Kühlmittel angesammelt hat, dass es bis zu den radial weiter innen liegenden Auslässen 21, 22 gelangt, kann das Kühlmittel aus dem Rotor 16 austreten.

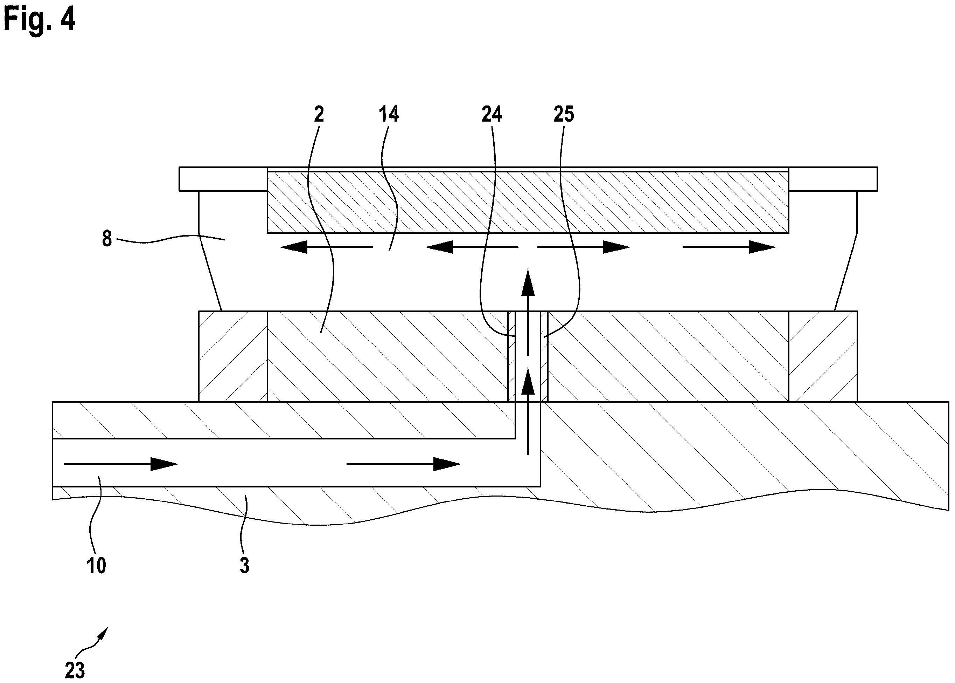

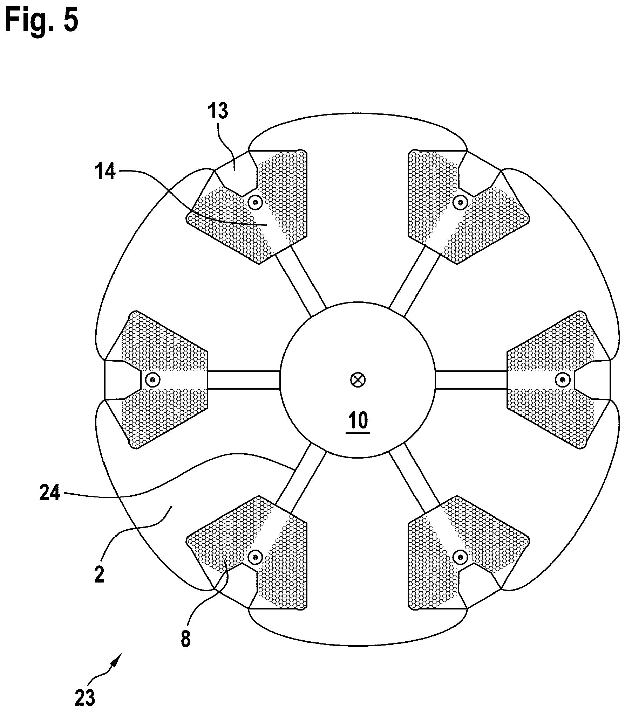

Figur 4 zeigt eine geschnittene Seitenansicht eines dritten Ausführungsbeispiels eines erfindungsgemäßen Rotors 23 und Figur 5 ist eine Ansicht des Rotors 23 in Axialrichtung. Wiederum werden solche Komponenten, die Komponenten der vorangehenden Ausführungsbeispiele entsprechen, nicht nochmals erläutert.

In Figur 4 erkennt man, dass von einem zentralen Kühlkanal 10 in der Rotorwelle 3 ein radialer Kühlkanal 24 abzweigt, der in einen axialen Kühlkanal 14 mündet. Der radiale Kühlkanal 24 ist zumindest näherungsweise in der Mitte des Blechpakets 2 angeordnet. An dieser Stelle weist das Blechpaket eine Kanalplatte 25 auf, in welcher der radiale Kühlkanal 24 verläuft. In dem dargestellten Ausführungsbeispiel ist die Kanalplatte 25 hohl ausgebildet, das heißt die Kanalplatte 25 umgibt beziehungsweise umschließt den radialen Kühlkanal 24 entlang seines gesamten Umfangs. Bei anderen Ausführungsbeispielen der Erfindung kann die Kanalplatte 25 auch eine Nut aufweisen, in welcher der radiale Kühlkanal 24 verläuft, wobei der Kühlkanals 24 mit einem Elektroblech abgedeckt beziehungsweise axial begrenzt ist.

Figur 5 ist eine ähnliche Ansicht wie Figur 4 und zeigt, dass der Rotor 23 insgesamt sechs über den Umfang verteilt angeordnete radiale Kühlkanäle 24 aufweist. Jeder Kühlkanal 24 befindet sich zwischen zwei benachbarten Rotorwicklungen 8. Indem das Kühlmittel von dem zentralen Kühlkanal 10 über die radialen Kühlkanäle 24 und weiter durch die axialen Kühlkanäle 14 strömt, werden radial außenliegende Bereiche des Rotors 23, insbesondere die Rotorwicklungen 8, gekühlt.

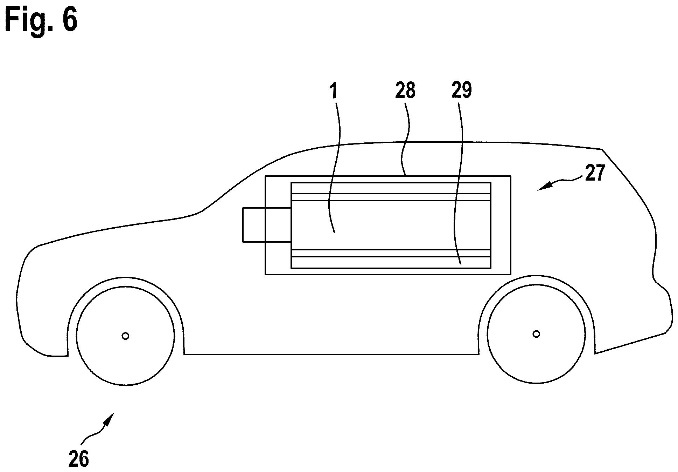

Figur 6 zeigt schematisch ein Fahrzeug 26 mit einer elektrischen Maschine 27, die zum Antreiben des Fahrzeugs 26 dient. Die elektrische Maschine 27 weist ein Gehäuse 28 auf, in dem der Rotor 1 und ein Stator 29 aufgenommen sind, der den Rotor 1 umgibt.

### Bezugszeichenliste

- 1: Rotor
- 2: Blechpaket
- 3: Rotorwelle
- 4: Endplatte
- 5: Endplatte
- 6: Vorsprung
- 7: Vorsprung
- 8: Rotorwicklung
- 9: Einlass
- 10: zentraler Kühlkanal
- 11: radialer Kühlkanal
- 12: Rotorwicklung
- 13: Poltrenner
- 14: axialer Kühlkanal
- 15: Isolationseinsatz
- 16: Rotor
- 17: Endkappe
- 18: Endkappe
- 19: axialer Abschnitt
- 20: axialer Abschnitt
- 21: Auslass
- 22: Auslass
- 23: Rotor
- 24: radialer Kühlkanal
- 25: Kanalplatte
- 26: Fahrzeug
- 27: elektrische Maschine
- 28: Gehäuse
- 29: Stator

## Patentansprüche

1. Rotor (1, 16, 23) für eine elektrische Maschine (27), umfassend:
- eine Rotorwelle (3),
- ein auf der Rotorwelle (3) angeordnetes Blechpaket (2) mit einer Mehrzahl gestapelter Elektrobleche,
- eine an einer Axialseite des Blechpakets (2) angeordnete erste Endplatte (4) mit entlang ihres Umfanges angeordneten radialen Vorsprüngen,
- eine an der gegenüberliegenden Axialseite des Blechpakets (2) angeordnete zweite Endplatte (5) mit entlang ihres Umfanges angeordneten radialen Vorsprüngen (7),
- mehrere Rotorwicklungen (8), die jeweils um einen Vorsprung der ersten Endplatte (4) und einen axial gegenüberliegenden Vorsprung der zweiten Endplatte (5) gewunden sind,
- einen in der Rotorwelle (3) verlaufenden zentralen Kühlkanal (10) zum Zuführen eines Kühlmittels und
- einen radialen Kühlkanal (11), der in dem Blechpaket (2) von dem zentralen Kühlkanal (10) nach außen verläuft.

2. Rotor nach Anspruch 1, wobei der radiale Kühlkanal (11) in einen axialen Kühlkanal (14) mündet, der zwischen zwei benachbarten Rotorwicklungen (8, 12) verläuft.

3. Rotor nach Anspruch 2, wobei der axiale Kühlkanal (14) von einem Poltrenner (13) abgedeckt wird, der sich axial zwischen den beiden Rotorwicklungen (8, 12) erstreckt.

4. Rotor nach Anspruch 2 oder 3, wobei der radiale Kühlkanal (11) an seinem äußeren Ende mit einem Isolationseinsatz (15) ausgekleidet ist, der die beiden Rotorwicklungen (8, 12) von dem Blechpaket (2) trennt.

5. Rotor nach einem der vorangehenden Ansprüche, wobei der radiale Kühlkanal (11) zumindest näherungsweise in der Mitte zwischen den Axialseiten des Blechpakets (2) angeordnet ist.

6. Rotor nach einem der vorangehenden Ansprüche, wobei das Blechpaket (2) eine zwischen den Elektroblechen angeordnete Kanalplatte (25) aufweist, in welcher der radiale Kühlkanal (11) verläuft.

7. Rotor nach Anspruch 6, wobei der radiale Kühlkanal (11) von der Kanalplatte (25) allein oder von der Kanalplatte (25) und einem Elektroblech gebildet wird.

8. Rotor nach Anspruch 6 oder 7, wobei die Kanalplatte (25) Aluminium oder eine Metalllegierung, vorzugsweise eine Aluminiumlegierung, aufweist.

9. Rotor nach einem der vorangehenden Ansprüche, wobei die erste Endplatte (4) und/oder die zweite Endplatte (5) jeweils axial mit einer Endkappe (17, 18) abgedeckt ist bzw. sind, in den der axiale Kühlkanal (14) mündet.

10. Rotor nach Anspruch 9, wobei die Endkappe (17, 18) einen axialen Auslass (21, 22) aufweist, der bezogen auf den axialen Kühlkanal (14) radial nach innen versetzt angeordnet ist.

11. Elektrische Maschine (27), mit einem Rotor (23) nach einem der Ansprüche 1 bis 10 und einem den Rotor (23) umgebenden Stator (29).

12. Fahrzeug (26) mit einer elektrischen Maschine (27) nach Anspruch 11, die zum Antreiben des Fahrzeugs (26) vorgesehen ist.
